# EUROPEAN PATENT APPLICATION

(11) **EP 1 932 746 A1**
(43) Date of publication of application: **18.06.2008**
(21) Application number: 07076058.2
(22) Date of filing: 07.12.2007
(51) Int. Cl.: B62D 7/14, B62D 13/04

(54) **Self-steer trailing axle**

(30) Priority: 11.12.2006 NL 1033032
(71) Applicant: WEWELER NEDERLAND B.V., 7332 AP Apeldoorn (NL)
(72) Inventor: Bramer, Hans, 6961 WR Eerbeek (NL)
(74) Representative: Houben, Christiaan Hein Willem Frans

(57) **Abstract**

The invention relates to a self-steering trailing axle for a vehicle, comprising an axle body (2), a wheel hub (4) for attaching a vehicle wheel (7), as well as a stub axle (3) attached to the end (2c) of the axle body (2). The stub axle (3) has a swivel axis (12) by means of which the wheel hub (4) is pivotably attached to the axle body (2). With the wheels (7) directed straight ahead, the centre axis (4a) of the wheel hub (4) is situated a distance behind the swivel axis (12), viewed in the direction of travel. At the location of the axle body end (2c), the centre axis (4a) of the wheel hub (4), viewed in the direction of travel, is a distance behind the centre axis (2a) of the axle body (2).

## Description

The invention relates to a self-steering trailing axle according to the preamble of claim 1.

Such trailing axles are known and are used with long vehicles, for example with trailers of tractor/trailer combinations. The wheels of the trailing axle can steer along with the tractor/trailer combination when it makes a turn around a bend, as a result of which the road surface used by the combination is reduced. The wheels of the trailing axles are friction-steered, i.e., the friction between the wheel and the road ensures that the wheels turn automatically. This is also referred to as self-steering, in contrast to steering axles where the wheels are steered actively.

Self-steering trailing axles comprise an axle body, a wheel hub for attaching a vehicle wheel, as well as a stub axle attached to the end of the axle body with a king pin by means of which the wheel hub is pivotably attached to the axle body. Viewed in the direction of travel, the stub axle is placed forward of the centre axis of the hub.

DE 41 34 501 and DE 203 04 107 show self-steering trailing axles of this type. With these known trailing axles, the centre axis of the axle body at the axle body end is in line with the centre axis of the wheel hub .

At the wheel hub, self-steering trailing axles are provided with a brake device comprising a brake cylinder which operates pneumatically or hydraulically in order to slow the hub down in a driving state. These brake cylinders allow the wheels to turn over a swivel angle of approximately 20°.

It is also possible to fit spring brake cylinders which, in addition to pneumatic power brakes, have a spring to lock the hub mechanically into a parked position. The spring brake cylinder extends substantially parallel to the wheel axle and has a longer housing than a strictly pneumatic brake cylinder.

A drawback which occurs specifically with axles with disc brakes is the fact that the relatively long spring brake cylinder which is mounted axially may touch the axle body when it swings along with the wheel hub when the wheels are being turned. This is undesirable and seriously limits the maximum swivel angle. For this reason, this kind of axial spring brake cylinder has to date mostly been used on non-steered (rigid) axles. Solutions are known in which the spring brake cylinder is placed in a high position so that it can swivel over the axle body at the top. Because of the limited space between the axle and the chassis, this solution cannot be used in trailers. Brake devices are also known in which the spring brake cylinder is placed radially with respect to the wheel axle and therefore does not form an obstruction. However, this solution is more expensive and cannot always be used in trailers or buses where the space under the chassis is limited.

It is an object of the invention to provide an improved trailing axle with self-steering wheels, i.e. passively steering wheels.

This object is achieved by means of a self-steering trailing axle according to claim 1.

According to the invention, the self-steering trailing axle comprises an axle body and a wheel hub for attaching a vehicle wheel. Furthermore, the trailing axle comprises a stub axle attached to the end of the axle body and having a swivel axis by means of which the wheel hub is pivotably attached to the axle body. The centre axis of the wheel hub is situated a distance behind the swivel axis, viewed in the direction of travel. Furthermore, the centre axis of the wheel hub is offset by a distance with respect to the centre axis of the axle body at the location of the axle body end.

A preferred embodiment comprises a straight axle body. Preferably, the axle body is a tubular thin-walled axle body. The production of such an axle body requires a relatively small processing operation.

Another advantageous embodiment comprises a curved axle body, in particular an axle body which is bent in the horizontal direction.

Preferably, the axle body is shaped in such a manner that, at the location of a clamping region of the axle body, where the axle body is clamped against a suspension strut of the wheel axle suspension, the centre axis comes to lie in line with the centre axis of the wheel hub. As a result, the axle load distribution and the bellows pressure are kept at the same level as with a standard rigid axle and, in that respect, nothing has to be changed on the suspension structure compared to the standard suspension for rigid axles.

In the following description, the invention will be explained in more detail with reference to the drawing, in which:
Fig. 1 shows a top view of a wheel axle suspension with a first embodiment of a trailing axle according to the invention,
Fig. 2 shows a side view of the wheel axle suspension from Fig. 1,
Fig. 3 shows a second embodiment of a trailing axle according to the invention,
Fig. 4 shows a top view of a wheel axle suspension with a third embodiment of a trailing axle according to the invention, and
Fig. 5 shows a side view of the wheel axle suspension from Fig. 4.

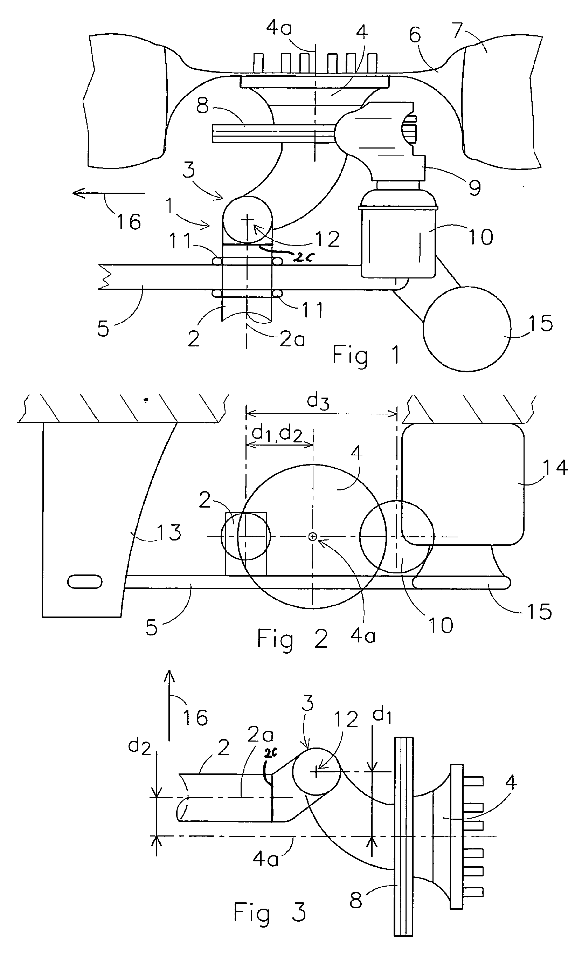

Fig. 1 and Fig. 2 show a possible embodiment of a wheel axle suspension for a self-steering trailing axle of a vehicle, for example a trailer. The trailing axle is denoted by reference numeral 1 and, in the illustrated example, has a straight thin-walled axle body 2. The axle body 2 is clamped to a suspension strut 5 by means of clamping straps 11. The suspension strut 5 is a leaf spring which is pivotably suspended with one end on a spring carrier arm 13 mounted on the chassis and has a bellows attachment part 15 at the other end where an air spring bellows 14 is attached to the suspension strut 5. The suspension arm 5 is supported in a sprung manner by the air spring bellows 14 which is attached to the chassis at its top.

A stub axle 3 is fitted to the end 2c of the axle body 2. The stub axle 3 has a wheel hub 4 fitted to it on which a wheel 7 with rim 6 is arranged. The stub axle 3 has a swivel axis which is denoted by reference numeral 12 and extends substantially transversely, for example at right angles, with respect to the centre axis 2a of the axle body 2. In the illustrated example, the stub axle 3 is in line with the axle body 2 in such a manner that the centre axis 2a of the axle body 2 and the swivel axis 12 cross one another. The swivel axis 12 is formed by a kingpin or the like. The wheel 7 with the hub 4 can swivel about the swivel axis 12. Viewed in the direction of travel (indicated by arrow 16), the centre axis 4a of the hub 4 is at a distance behind the centre axis 2a of the axle body 2 and behind the swivel axis 12 of the stub axle 3. In practice, this distance may be approximately 130-140 mm. The hubs 4 arranged on both ends of the axle body 2 are coupled by means of a horizontally acting damping device (not shown) in order to prevent judder during driving, i.e. vibration of the self-steering wheels around a central position. Furthermore, a locking device (not shown) is provided in order to prevent the wheels from turning when the vehicle is driven in reverse.

Furthermore, a brake device is provided on the hub 4 with brake discs 8 and brake calipers 9. The brake calipers 9 can be actuated by means of a spring brake cylinder 10 by means of which the brake calipers 9 can be brought into engagement with the brake discs 8. The wheel 7 can thus be slowed down by means of friction. The spring brake cylinder 10 may operate pneumatically in a driving state. Furthermore, the spring brake cylinder 10 also comprises a spring by means of which the brake calipers 9 can be brought into contact with the brake discs 8. The latter takes place in particular in a parked position, but also when the pneumatic operation of the brake fails. The spring brake cylinder 10 extends with the centre axis substantially parallel to the centre axis of the axle body 2. As the centre axis 4a of the hub 4 is situated a distance d3 behind the centre axis 2a of the axle body 2, more space is created for the spring brake cylinder 10 to pivot. As a result thereof, the wheel 7 has a maximum swivel angle of approximately 20°.

Fig. 3 shows another embodiment of a self-steering trailing axle of a vehicle. With this trailing axle, parts which are identical to those of the embodiments from Fig. 1 and Fig. 2 are denoted by the same reference numerals. The difference to the embodiment illustrated in Figs. 1 and 2 is that the swivel axis 12 of the stub axle 3, viewed in the direction of travel, is situated in front of the centre axis 2a of the axle body. Relative to the centre axis 4a of the hub 4, the swivel axis 12 has a distance d1 in the direction of travel, which distance d1 is greater than the distance d2 in the direction of travel between the centre axis 2a of the axle body 2 and the centre axis 4a of the hub 4.

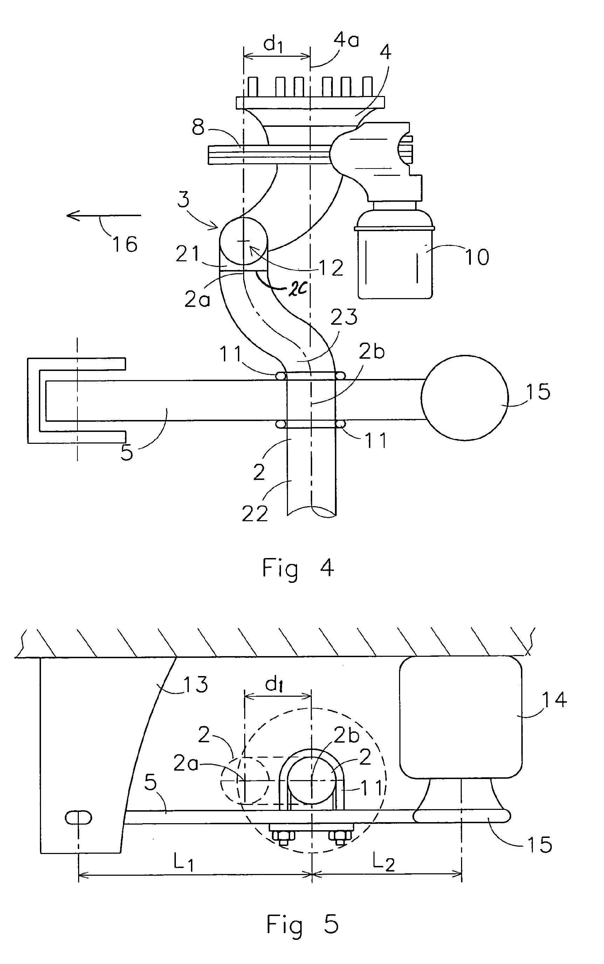

Fig. 4 and Fig. 5 show yet another embodiment of a suspension for a self-steering trailing axle. As with the previous embodiments, identical parts are indicated by the same reference numerals in this case as well. In this embodiment, the axle body 2 is curved in the horizontal direction. The axle body 2 has a substantially straight central part 21 and substantially straight end parts 22. Furthermore, the axle body 2 has a clamping part 23 where the axle body is attached to the suspension strut 5 by means of axle clamping means. The centre axis 2a at the location of the end 2c of the axle body 2 is parallel to the centre axis 2b of the axle body 2 at the location of the axle clamping means. The stub axle 3 crosses the centre axis 2a of the axle at the location of the end 2c of the axle body 2. The centre axis 4a of the hub 4, viewed in the direction of travel, is situated at a distance d1 behind the centre axis 2a of the axle 2 at the location of the axle end 2c. Furthermore, the centre axis 2b of the axle body 2, at the location of the axle clamping means, is in line with the centre axis 4a of the hub 4. This offers the advantage that centre axis 4a of the wheel hub 4 is situated at the same distance L1 or L2, respectively, with respect to the pivot point of the suspension strut 5 or the centre axis of the bellows 14, respectively, as would be the case with a standard straight rigid axle, i.e. a non-steered axle. As a result, the axle load distribution and the bellows pressure is the same as in the case of a standard rigid axle and, in that respect, nothing has to be changed on the suspension structure compared to the standard suspension.

## Claims

1. Self-steering trailing axle for a vehicle, comprising an axle body (2), a wheel hub (4) for attaching a vehicle wheel (7), as well as a stub axle (3) attached to the end (2c) of the axle body (2) and having a swivel axis (12) by means of which the wheel hub (4) is pivotably attached to the axle body (2), in which, with the wheels directed straight ahead, the centre axis (4a) of the wheel hub (4) is situated a distance (d1) behind the swivel axis (12), viewed in the direction of travel, **characterized in that** the centre axis of the wheel hub (4a), viewed in the direction of travel, is a distance (d2) behind the centre axis (2a) of the axle body (2) at the location of the axle body end (2c).

2. Self-steering trailing axle according to claim 1, in which the axle body (2) is substantially straight.

3. Self-steering trailing axle according to claim 1, in which the axle body (2) is curved.

4. Self-steering trailing axle according to one of the preceding claims, in which the centre axis (2a) of the axle body (2) crosses the swivel axis (12) of the stub axle (3) at the location of the axle body end (2c).

5. Self-steering trailing axle according to one of claims 1-3, in which, viewed in the direction of travel, the distance (d1) between the centre axis (4a) of the wheel hub (4) and the swivel axis (12) is greater than the distance (d2) between the centre axis (4a) of the wheel hub (4) and the centre axis (2a) of the axle body (2).

6. Self-steering trailing axle according to one of the preceding claims, in which a brake device (8, 9, 10) is provided on the wheel hub (4).

7. Self-steering trailing axle according to claim 6, in which the brake device comprises disc brakes (8, 9), as well as a spring brake cylinder (10) to lock the disc brakes in a parked position.

8. Self-steering trailing axle according to claim 7, in which the spring brake cylinder (10) extends substantially parallel to the centre axis (2a) of the axle body (2).

9. Self-steering trailing axle according to claim 3, in which the axle body (2) has a clamping region (23) where the axle body (2) can be attached by means of axle clamping means to a suspension strut (5) of an air-sprung wheel axle suspension, extending in the longitudinal direction, and in which the centre axis (2b) of the axle body (2) is in line with the centre axis (4a) of the wheel hub (4) at the clamping region (23).

10. Trailer provided with a self-steering trailing axle according to one of the preceding claims.

11. Trailer provided with a self-steering trailing axle according to claim 3, in which the axle body (2) is attached by means of axle clamping means to a suspension strut (5) of an air-sprung wheel axle suspension, extending in the longitudinal direction, in which the centre axis of the axle body (2b) is in line with the centre axis (4a) of the wheel hub (4) at the location of the axle clamping means.

12. Bus provided with a self-steering trailing axle according to one of claims 1-9.
